(19) Europäisches Patentamt / European Patent Office / Office européen des brevets

(11) **EP 3 819 827 A1**

(12) **EUROPEAN PATENT APPLICATION**
published in accordance with Art. 153(4) EPC

(43) Date of publication:
**12.05.2021 Bulletin 2021/19**

(21) Application number: **19829857.2**

(22) Date of filing: **21.06.2019**

(51) Int Cl.:
***G06N 20/00*** (2019.01)

(86) International application number:
**PCT/JP2019/024767**

(87) International publication number:
**WO 2020/008919 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **04.07.2018 JP 2018127871**

(71) Applicant: **Aising Ltd.**
**Tokyo 107-0052 (JP)**

(72) Inventors:
• **IDESAWA Junichi**
 **Tokyo 107-0052 (JP)**
• **SUGAWARA Shimon**
 **Tokyo 107-0052 (JP)**

(74) Representative: **Kilian Kilian & Partner**
**Aidenbachstraße 54**
**81379 München (DE)**

(54) **MACHINE LEARNING DEVICE AND METHOD**

(57)    To provide a machine learning technique which enables prediction of output with higher accuracy while utilizing Random Forests. A machine learning device which uses a plurality of decision trees generated on the basis of a predetermined learning target data set is provided. The machine learning device includes an input data acquiring unit configured to acquire predetermined input data, a decision tree output generating unit configured to generate decision tree output which is output of each of the decision trees on the basis of the input data, and a parameter updating unit configured to update a parameter of an output network which is coupled to an output stage of each of the decision trees and generates predicted output on the basis of at least the decision tree output and predetermined training data corresponding to the input data.

FIG. 3

EP 3 819 827 A1

**Description**

Technical Field

The present invention relates to a machine learning technique which enables computing of predicted output in a regressive manner on the basis of predetermined input data and identification of a category corresponding to the input data.

Background Art

A machine learning technique which enables computing of predicted output in a regressive manner on the basis of predetermined input data and identification of a category corresponding to the input data, which is, so-called Random Forests has been known in the related art. For example, Non Patent Literature 1 discloses an example of Random Forests.

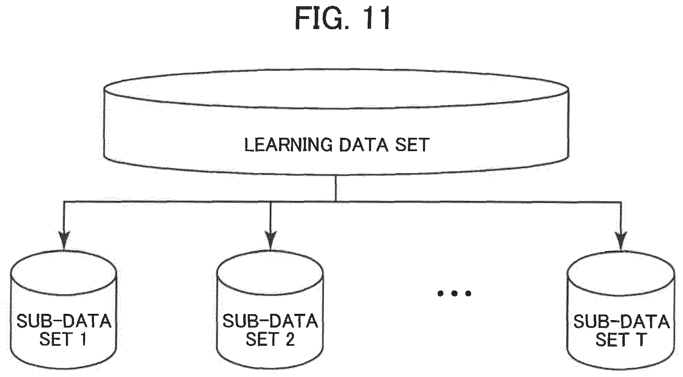

An example of the machine learning technique called Random Forests will be described with reference to Figure 11 to Figure 14. Random Forests have a learning processing stage and a prediction processing stage. First, the learning processing stage will be described.

Figure 11 is a conceptual diagram regarding predetermined pre-processing to be performed on a learning target data set. The learning target data set is a data aggregate including a plurality of data sets. As illustrated in Figure 11, T sub-data sets are generated by randomly extracting data from this data aggregate while allowing multi-choose.

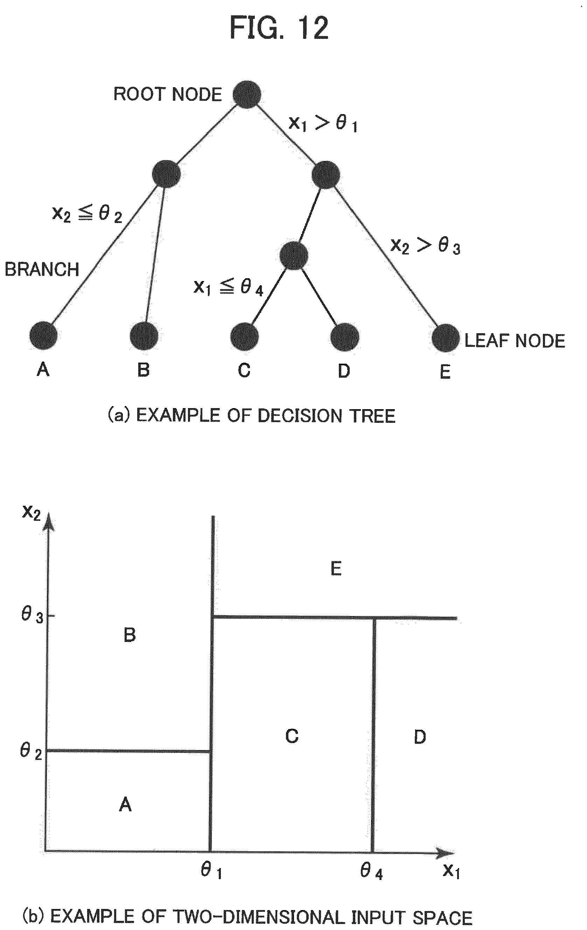

Figure 12 is an explanatory diagram regarding a decision tree generated from each sub-data set, and Figure 12(a) is an explanatory diagram representing an example of a structure of the decision tree. As can be clear from Figure 12(a), the decision tree has a tree structure which leads to leaf nodes at ends (nodes at the bottom in Figure 12(a)) from a root node (node at the top in Figure 12(a)) which is a base end. A branch condition of branching in accordance with whether a value is greater or smaller than each of thresholds $\theta_1$ to $\theta_4$ is associated with each node. This branching condition finally makes input data input from the root node associated with one of leaf nodes A to E.

As can be clear from Figure 12(a), data which satisfies conditions of $x_1 \leq \theta_1$ and $x_2 \leq \theta_2$ is associated with the leaf node A. Data which satisfies conditions of $x_1 \leq \theta_1$ and $x_2 > \theta_2$ is associated with the leaf node B. Input which satisfies conditions of $x_1 > \theta_1$, $x_2 \leq \theta_3$ and $x_1 \leq \theta_4$ is associated with the leaf node C. Input which satisfies conditions of $x_1 > \theta_1$, $x_2 \leq \theta_3$ and $x_1 > \theta_4$ is associated with the leaf node D. Input which satisfies conditions of $x_1 > \theta_1$ and $x_2 > \theta_3$ is associated with the leaf node E.

Figure 12(b) illustrates the decision tree structure illustrated in Figure 12(a) on two-dimensional input space. A plurality of such decision trees are generated for each sub-data set by randomly setting dividing axes and dividing values.

Next, a method for identifying one decision tree for which an information gain is a maximum from a plurality of decision trees generated so as to correspond to respective sub-data sets will be described. The information gain IG is calculated using the following information gain function. Note that $I_G$ represents Gini impurity, $D_p$ represents a data set of a parent node, $D_{left}$ represents a data set of a left child node, $D_{right}$ represents a data set of a right child node, Np represents a total number of samples of the parent node, $N_{left}$ represents a total number of samples of the left child node, and $N_{right}$ represents a total number of samples of the right child node.

[Expression 1]

$$IG\left(D_p, f\right) = I_G\left(D_p\right) - \frac{N_{left}}{N_p} I_G\left(D_{left}\right) - \frac{N_{right}}{N_p} I_G\left(D_{right}\right)$$

Note that Gini impurity $I_G$ is calculated using the following expression.

[Expression 2]

$$I_G\left(t\right) = 1 - \sum_{i=1}^{c} p\left(i \mid t\right)^2$$

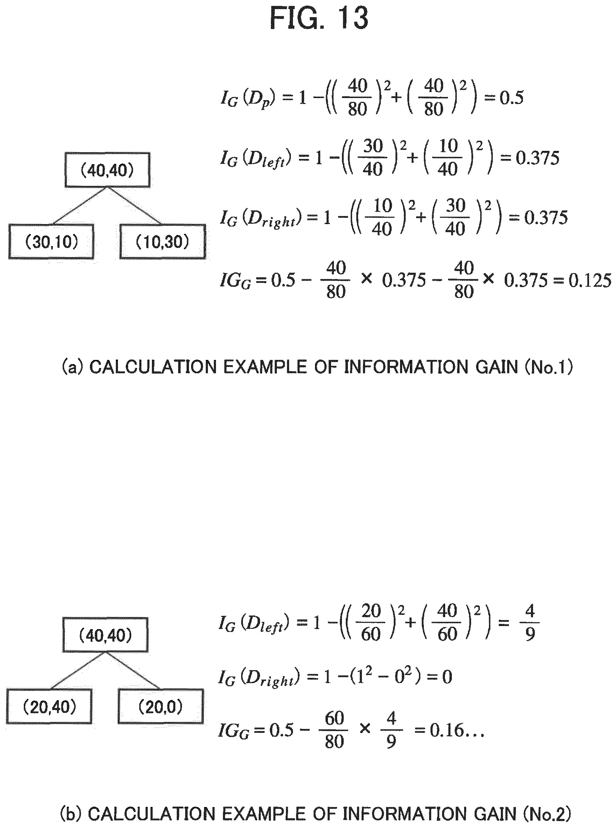

A calculation example of the information gain will be described with reference to Figure 13. Figure 13(a) indicates a calculation example (No. 1) of the information gain in a case where data classified into 40 pieces and 40 pieces is further classified into 30 pieces and 10 pieces in a left path, and classified into 10 pieces and 30 pieces in a right path. Gini impurity of the parent node can be calculated as follows.

[Expression 3]

$$I_G(D_p) = 1 - \left( \left( \frac{40}{80} \right)^2 + \left( \frac{40}{80} \right)^2 \right) = 0.5$$

Meanwhile, Gini impurity of the left child node and Gini impurity of the right child node are as follows.

[Expression 4]

$$I_G(D_{left}) = 1 - \left( \left( \frac{30}{40} \right)^2 + \left( \frac{10}{40} \right)^2 \right) = 0.375$$

[Expression 5]

$$I_G(D_{right}) = 1 - \left( \left( \frac{10}{40} \right)^2 + \left( \frac{30}{40} \right)^2 \right) = 0.375$$

Thus, the information gain can be calculated as follows.

[Expression 6]

$$IG_G = 0.5 - \frac{40}{80} \times 0.375 - \frac{40}{80} \times 0.375 = 0.125$$

Meanwhile, Figure 13(b) indicates a calculation example (No. 2) of the information gain in a case where data classified into 40 pieces and 40 pieces is further classified into 20 pieces and 40 pieces in a left path, and classified into 20 pieces and 0 pieces in a right path.
Gini impurity of the parent node is similar to that described above. Meanwhile, Gini impurity of the left child node and Gini impurity of the right child node are as follows.

[Expression 7]

$$I_G(D_{left}) = 1 - \left( \left( \frac{20}{60} \right)^2 + \left( \frac{40}{60} \right)^2 \right) = \frac{4}{9}$$

[Expression 8]

$$I_G(D_{right}) = 1 - (1^2 - 0^2) = 0$$

Thus, the information gain can be calculated as follows.

[Expression 9]

$$IG_G = 0.5 - \frac{60}{80} \times \frac{4}{9} = 0.16...$$

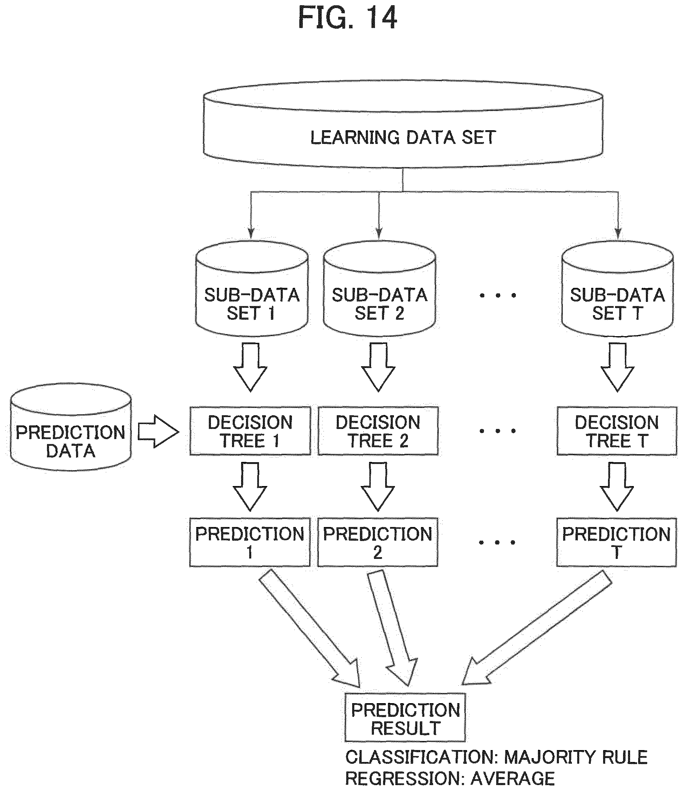

In other words, in the example in Figure 13, the decision tree illustrated in Figure 13(b) is preferentially selected because the information gain is greater in a case of Figure 13(b). By such processing being performed on each decision tree, one decision tree is determined for each sub-data set.
The prediction processing stage will be described next with reference to Figure 14. Figure 14 is a conceptual diagram regarding prediction processing using Random Forests. As can be clear from Figure 14, if new input data is presented, predicted output is generated from each decision tree corresponding to each sub-data set. In this event, in a case where a category is predicted, for example, a final predicted category is determined by applying a majority rule to categories (labels) corresponding to prediction results. Meanwhile, in a case where a numerical value is predicted in a regressive manner, for example, a final predicted value is determined by calculating an average of output values corresponding to predicted output.

Citation List

Non Patent Literature

Non Patent Literature 1: Leo Breiman, "RANDOM FORESTS", [online], January, 2001, Statistics Department, University of California Berkeley, CA 94720, Accessed April 2, 2018, Internet, Retrieved from: http://www.stat.berkeley.edu/~breiman/randomforest2001.pd f

Summary of Invention

Technical Problem

However, Random Forests in the related art generate each sub-data set by randomly extracting data from a learning target data set and randomly determine dividing axes and dividing values of the corresponding decision tree, and thus, may include a decision tree whose prediction accuracy is not necessarily favorable or a node in an output stage of the decision tree whose prediction accuracy is not necessarily favorable, which may lead to degradation of accuracy of final predicted output.

The present invention has been made on the technical background described above, and an object of the present invention is to provide a machine learning technique which enables prediction of output with higher accuracy while utilizing Random Forests.

Other objects and operational effects of the present invention will be easily understood by a person skilled in the art with reference to the following description of the specification.

Solution to Problem

The above-described technical problem can be solved by a device, a method, a program, a learned model, and the like, having the following configuration.

In other words, a machine learning device according to the present invention is a machine learning device using a plurality of decision trees generated on the basis of a predetermined learning target data set, the machine learning device including an input data acquiring unit configured to acquire predetermined input data, a decision tree output generating unit configured to generate decision tree output which is output of each of the decision trees on the basis of the input data, and a parameter updating unit configured to update a parameter of an output network which is coupled to an output stage of each of the decision trees and generates predicted output on the basis of at least the decision tree output and predetermined training data corresponding to the input data.

According to such a configuration, the parameter of the output network provided at the output stages of the plurality of decision trees can be gradually updated using the training data, so that it is possible to predict output while giving a weight on a node at an output stage of a decision tree with higher accuracy. Consequently, it is possible to provide a machine learning technique which enables prediction of output with higher accuracy while utilizing Random Forests. Further, it is possible to update only the output network through learning while using the same decision tree, so that it is possible to provide a machine learning technique which is suitable for additional learning.

The output network may include an output node coupled to an end node of each of the decision trees via a weight.

The input data may be data selected from the learning target data set.

The machine learning device may further include a predicted output generating unit configured to generate the predicted output at the output node on the basis of the decision tree output and the weight, and the parameter updating unit may further include a weight updating unit configured to update the weight on the basis of a difference between the training data and the predicted output.

The parameter updating unit may further include a label determining unit configured to determine whether or not a predicted label which is the decision tree output matches a correct label which is the training data, and a weight updating unit configured to update the weight on the basis of a determination result by the label determining unit.

The plurality of decision trees may be generated for each of a plurality of sub-data sets which are generated by randomly selecting data from the learning target data set.

The plurality of decision trees may be decision trees generated by selecting a branch condition which makes an information gain a maximum on the basis of each of the sub-data sets.

Further, the present invention can be also embodied as a prediction device. In other words, a prediction device according to the present invention is a prediction device using a plurality of decision trees generated on the basis of a predetermined learning target data set, the prediction device including an input data acquiring unit configured to acquire predetermined input data, a decision tree output generating unit configured to generate decision tree output which is output of each of the decision trees on a basis of the input data, and an output predicting unit configured to generate predicted output on the basis of an output network including an output node coupled to an end node of each of the decision trees via a weight.

Each piece of the decision tree output may be numerical output, and the predicted output may be generated on the basis of a sum of products of the numerical output and the weight of all the decision trees.

Each piece of the decision tree output may be a predetermined label, and an output label which is the predicted output may be a label for which a sum of the corresponding weights is a maximum.

The prediction device may further include an effectiveness generating unit configured to generate effectiveness of the decision trees on the basis of a parameter of the output network.

The prediction device may further include a decision tree selecting unit configured to determine the decision trees to be substituted, replaced or deleted on the basis of the effectiveness.

The present invention can be also embodied as a machine learning method. In other words, a machine learning method according to the present invention is a machine learning method using a plurality of decision trees generated on the basis of a predetermined learning target data set, the machine learning method including an input data acquisition step of acquiring predetermined input data, a decision tree output generation step of generating decision tree output which is output of each of the decision trees on the basis of the input data, and a parameter updating step of updating a parameter of an output network which is coupled to an output stage of each of the decision trees and generates predicted output on the basis of at least the decision tree output and predetermined training data corresponding to the input data.

The present invention can be also embodied as a machine learning program. In other words, a machine learning program according to the present invention is a machine learning program for causing a computer to function as a machine learning device which uses a plurality of decision trees generated on the basis of a predetermined learning target data set, the machine learning program including an input data acquisition step of acquiring predetermined input data, a decision tree output generation step of generating decision tree output which is output of each of the decision trees on the basis of the input data, and a parameter updating step of updating a parameter of an output network which is coupled to an output stage of each of the decision trees and generates predicted output on the basis of at least the decision tree output and predetermined training data corresponding to the input data.

The present invention can be also embodied as a prediction method. A prediction method according to the present invention is a prediction method using a plurality of decision trees generated on the basis of a predetermined learning target data set, the prediction method including an input data acquisition step of acquiring predetermined input data, a decision tree output generation step of generating decision tree output which is output of each of the decision trees on the basis of the input data, and an output prediction step of generating predicted output on the basis of an output network including an output node coupled to an end node of each of the decision trees via a weight.

The present invention can be also embodied as a prediction program. In other words, a prediction program according to the present invention is a prediction program for causing a computer to function as a prediction device which uses a plurality of decision trees generated on the basis of a predetermined learning target data set, the prediction program including an input data acquisition step of acquiring predetermined input data, a decision tree output generation step of generating decision tree output which is output of each of the decision trees on the basis of the input data, and an output prediction step of generating predicted output on the basis of an output network including an output node coupled to an end node of each of the decision trees via a weight.

The present invention can be also embodied as a learned model. In other words, a learned model according to the present invention is a learned model including a plurality of decision trees generated on the basis of a predetermined learning target data set and an output network including an output node coupled to an end of each of the decision trees via a weight, and in a case where predetermined input data is input, decision tree output which is output of each of the decision trees is generated on the basis of the input data, and predicted output is generated at the output node on the basis of each piece of the decision tree output and each weight.

Advantageous Effects of Invention

According to the present invention, it is possible to provide a machine learning technique which enables prediction of output with higher accuracy while utilizing Random Forests.

Brief Description of Drawings

[Figure 1] Figure 1 is a configuration diagram of hardware.
[Figure 2] Figure 2 is a general flowchart.
[Figure 3] Figure 3 is a conceptual diagram (first embodiment) of algorithm.
[Figure 4] Figure 4 is a flowchart of decision tree generation processing.
[Figure 5] Figure 5 is a flowchart (No. 1) of learning processing.
[Figure 6] Figure 6 is a conceptual diagram of change of an output value by updating of a weight.
[Figure 7] Figure 7 is a flowchart (No. 1) of prediction processing.
[Figure 8] Figure 8 is a flowchart (No. 2) of the learning processing.
[Figure 9] Figure 9 is a flowchart (No. 2) of the prediction processing.
[Figure 10] Figure 10 is a flowchart of additional learning processing.
[Figure 11] Figure 11 is a conceptual diagram regarding pre-processing.
[Figure 12] Figure 12 is an explanatory diagram regarding a decision tree.
[Figure 13] Figure 13 is an explanatory diagram regarding calculation of an information gain.
[Figure 14] Figure 14 is a conceptual diagram regarding prediction processing using Random Forests.

Description of Embodiments

Embodiments of the present invention will be described in detail below with reference to the accompanying drawings.

<1. First embodiment>

<1.1. Hardware configuration>

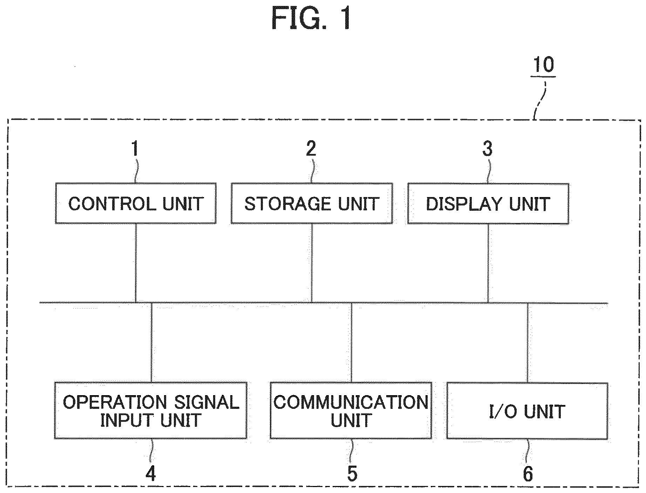

A configuration of hardware in which machine learning processing, prediction processing, and the like, according to the present embodiment are executed will be described with reference to Figure 1. As can be clear from Figure 1, an information processing device 10 according to the present embodiment includes a control unit 1, a storage unit 2, a display unit 3, an operation signal input unit 4, a communication unit 5, and an I/O unit 6 which are connected via a bus. The information processing device 10 is, for example, a PC, a smartphone or a tablet terminal.

The control unit 1, which is a control device such as a CPU, controls the whole of the information processing device 10 and performs execution processing, and the like, of a read computer program for learning processing or prediction processing. The storage unit 2, which is a volatile or non-volatile storage device such as a ROM and a RAM, stores learning target data, training data corresponding to the learning target data, a machine learning program, a prediction processing program, and the like. The display unit 3, which is connected to a display, and the like, controls display and provides GUI to a user via the display, and the like. The operation signal input unit 4 processes a signal input via an input unit such as a keyboard, a touch panel and a button. The communication unit 5 is a communication chip, or the like, which performs communication with external equipment through the Internet, a LAN, or the like. The I/O unit 6 is a device which performs processing of inputting and outputting information to and from external devices.

Note that the hardware configuration is not limited to the configuration according to the present embodiment, and components and functions may be distributed or integrated. For example, it is, of course, possible to employ a configuration where processing is performed by a plurality of information processing devices 1 in a distributed manner, a configuration where a large-capacity storage device is further provided outside and connected to the information processing device 1, or the like.

<1.2. Operation>

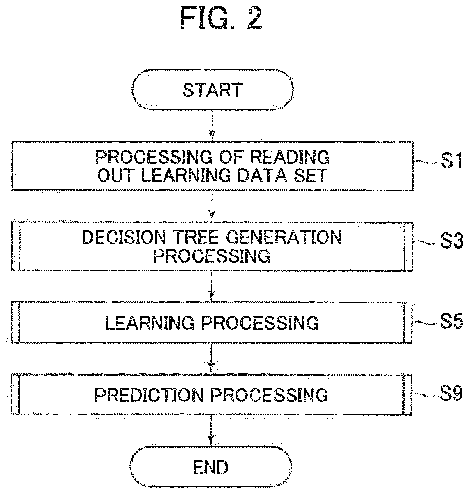

Operation of the information processing device 1 will be described next with reference to Figure 2 to Figure 7.

<1.2.1. Overview>

Figure 2 is a general flowchart regarding operation of the information processing device 1. As can be clear from Figure 2, when processing is started, a data set to be learned is read out from the storage unit 2 to the control unit 1 (S1). This data set to be learned may be any data including, for example, sensor data, or the like, at each joint of a multijoint robot. If processing of reading out the learning data set is completed, then, processing of generating a plurality of decision trees (S3) is performed as will be described later. If a plurality of decision trees are generated, machine learning processing is performed at an output network coupled with subsequent stages of the decision trees (S5) as will be described later. After the machine learning processing is completed, the information processing device 1 according to the present embodiment also functions as a predictor which is capable of performing prediction processing (S9) as will be described later. Note that while the decision tree generation processing (S3) is described as processing separate from the machine learning processing (S5) in the present embodiment, these kinds of processing may be integrally dealt as machine learning processing in a broad sense.

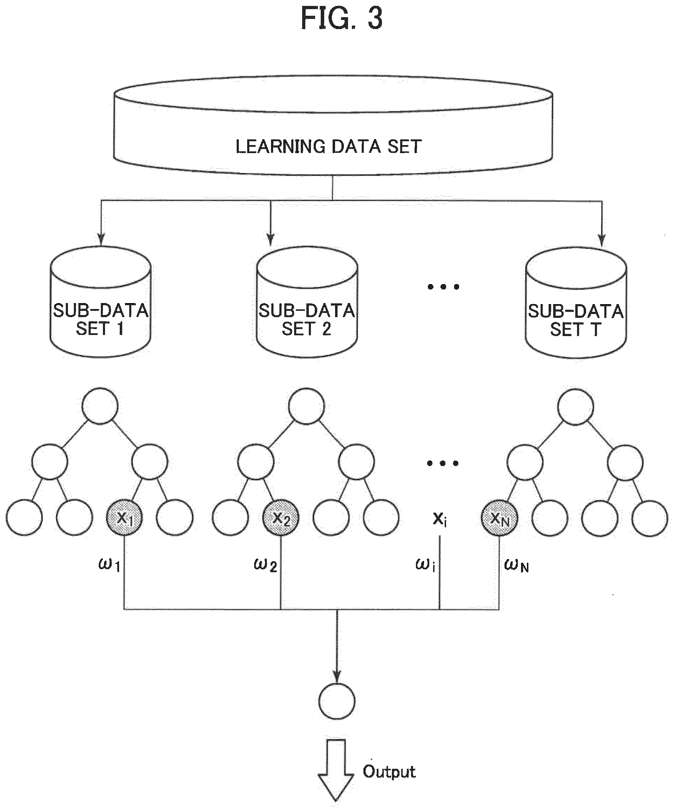

Here, algorithm or concept of a network configuration in which the machine learning processing and the prediction processing according to the present embodiment are performed will be described here using Figure 3. A plurality of T sub-data sets are generated from the learning target data set at the top in Figure 3 as will be described later (the second stage from the top in Figure 3). Thereafter, a decision tree which satisfies a predetermined condition is generated at each sub-data set as will be described later (tree structure in the third stage from the top in Figure 3). Leaf nodes at ends of the respective decision trees are coupled to an output node via weights w. In a learning processing stage (S5), a value of this weight w is updated on the basis of the predetermined input data and training data. Meanwhile, in a prediction processing stage (S9), predetermined output prediction processing is performed using the decision tree and the value of the weight w.

<1.2.2 Decision tree generation processing>

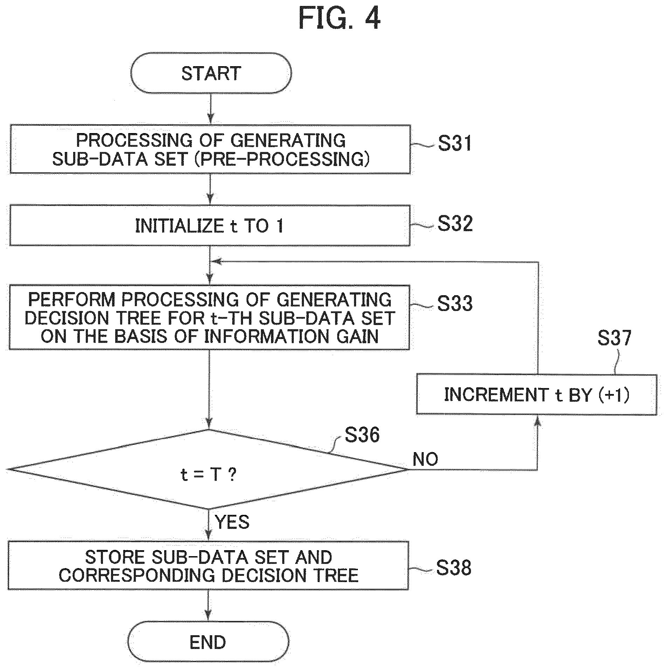

Figure 4 is a detailed flowchart of the decision tree generation processing (S3). As can be clear from Figure 4, when processing is started, processing of generating a plurality of sub-data sets from the learning target data set is performed as pre-processing (S31). Specifically, each sub-data set is formed by randomly extracting a predetermined number of a plurality of data sets from the learning target data set while allowing multi-choose.

Then, processing of initializing a predetermined variable is performed (S32). Here, a variable t to be used in repetition processing is initialized to 1. Then, processing of generating one decision tree whose information gain is the highest in a sub-data set of t = 1 is performed (S33). In more detail, a plurality of branch conditions which are randomly selected are applied for a root node first. Here, the branch conditions are, for example, dividing axes, dividing boundary values, and the like. Subsequently, processing of calculating respective information gains in respective cases of the plurality of branch conditions which are randomly selected, is performed. This calculation of the information gains is the same as that indicated in Figure 13. Finally, a branch condition which derives a high information gain is determined by identifying a branch condition which makes the information gain a maximum. One decision tree with a high information gain is generated by this series of processing being sequentially performed down to leaf nodes.

This processing of generating a decision tree with a high information gain (S33) is repeatedly performed while t is incremented by 1 (S36: No, S37). When the decision tree which makes the information gain a maximum is generated for all the sub-data sets (t = T) (S36: Yes), the repetition processing is finished. Then, the sub-data sets and the decision trees corresponding to the respective sub-data sets are stored in the storage unit 2 (S38), and the processing is finished.

<1.2.3 Machine learning processing>

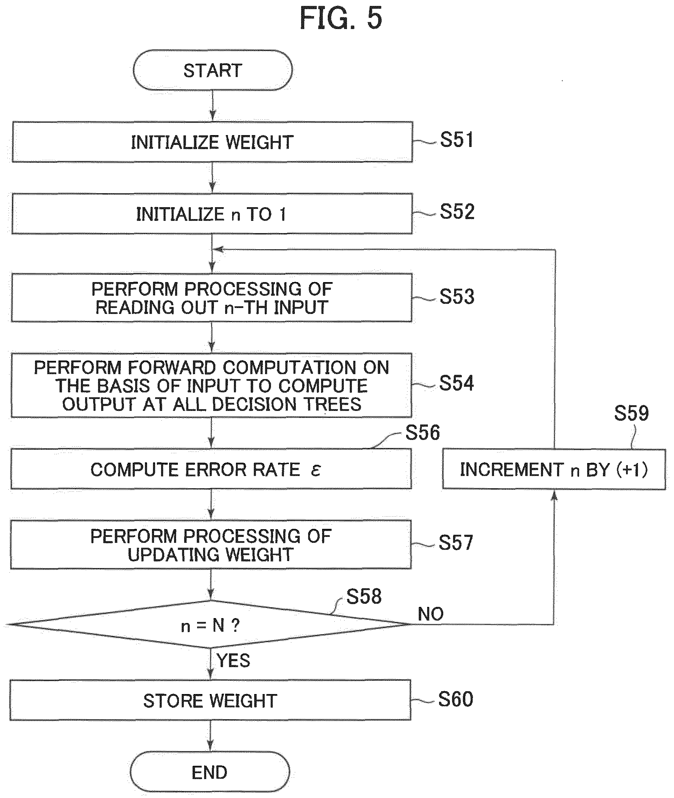

Figure 5 is a detailed flowchart of the learning processing (S5). Figure 5 illustrates learning processing in a case where a decision tree outputs a category label which is a classification result. As can be clear from Figure 5, when the processing is started, a value of the weight w which connects an end node (leaf node) of the decision tree and an output node is initialized (S51). This value to be utilized for the initialization may be, for example, the same among all the weights w. Thereafter, processing of initializing a predetermined variable is performed (S52). Here, a variable n to be used in repetition processing is initialized to 1.

Thereafter, processing of reading out one data set from the learning target data set to the control unit 1 as n-th input data is performed (S53). Then, forward computation is performed while the n-th input data is input to a decision tree generated for each sub-data set, and the corresponding end node, that is, a category label to which input data should belong is output (S54).

Thereafter, an error rate $\varepsilon$ which is a ratio regarding whether the category label is correct or wrong is computed (S56). Specifically, a training label which is training data corresponding to the input data is read out, and whether the category label is correct or wrong is determined by comparing the training label with an output label of each decision tree. In a case where it is determined that a wrong category is output, processing of incrementing a value of error count (Error Count) by 1 is performed using the following expression. Note that this processing corresponds to substitution of a value on the right side into a value on the left side in the following expression.

[Expression 10]

$$Output = \sum_i w_i\, x_i$$

After determination as to whether the category label is correct or wrong and the computation processing regarding an error count value described above are performed for all the decision trees, an error rate $\varepsilon$ is calculated as follows by dividing the error count value by the number (T) of the decision trees.

[Expression 11]

$$ErrorCount = ErrorCount + 1$$

After the error count is calculated, weight updating processing is performed (S57). Specifically, the weight is updated by applying the following expression for each weight.

[Expression 12]

$$\varepsilon = \frac{ErrorCount}{T}$$

Note that in this event, a value of sign is 1 when the output label which is output of the decision tree matches the training label, and is -1 when the output label does not match the training label. In other words, the value of sign is as follows.

[Expression 13]

$$w_i \leftarrow w_i \cdot e^{\,sign \cdot \varepsilon}$$

The above-described processing (S53 to S57) is performed for all (N pieces of) input data while the value of the variable n is incremented by 1 (S58: No, S59). If the processing is completed for all the input data (S58: Yes), the weight w is stored in the storage unit 2 (S60), and the processing is finished.

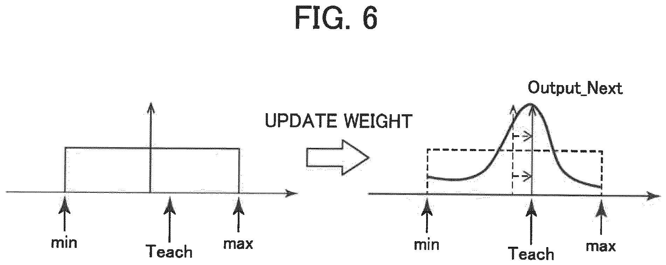

Figure 6 is a conceptual diagram of change of the output value by updating of the weight. As can be clear from Figure 6, the function is approximated so that the output (Output_Next) is closer to the training data (Teach) by updating of the weight.

Such a configuration enables machine learning processing of the output network to be appropriately performed in a case where the category label is generated from the decision tree.

Note that the above-described machine learning processing is an example, and other various publicly known methods can be employed in a specific arithmetic expression or a computation method relating to updating of the weight. Further, an updating target is not limited to the weight, and other parameters, for example, a predetermined bias value may be learned.

<1.2.4 Prediction processing>

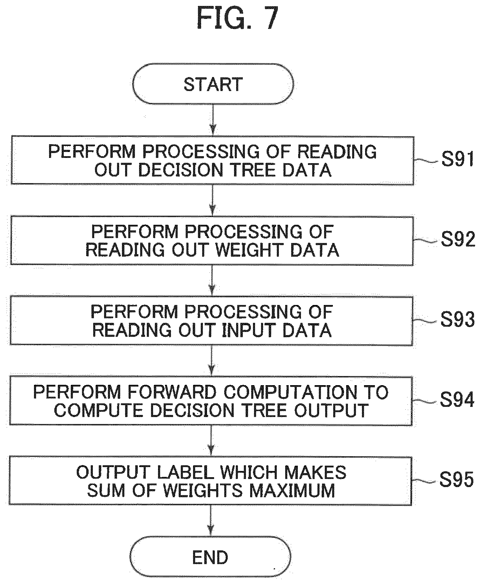

Next, prediction processing to be performed by the information processing device 10 after learning will be described with reference to Figure 7. Figure 6 is a flowchart of the prediction processing.

As can be clear from Figure 7, when the processing is started, processing of reading out a plurality of decision trees prepared for each sub-data set is performed (S91). Thereafter, processing of reading out the weight w is performed (S92). Then, input data for which it is desired to perform prediction is read (S93), and an output label is identified in each decision tree by performing predetermined forward computation (S94). Subsequently, a sum of the weights w for nodes which output the same label is calculated for each label and compared. A label for which the sum of the weights w is a maximum as a result of comparison is output as a final output label (S95), and the prediction processing is finished.

Such a configuration enables prediction processing to be performed appropriately using the output network in a case where a category label is generated from the decision tree.

Note that the above-described prediction processing is an example, and other various publicly known methods can be employed as a method for determining a final output label, and the like.

According to the configuration described above, it is possible to gradually update a parameter of the output network provided at output stages of a plurality of decision trees using the training data, so that it is possible to predict output while giving a weight on a node with higher accuracy among the output stages of the decision trees. Consequently, it is possible to provide a machine learning technique which enables prediction of output with higher accuracy while utilizing Random Forests.

<2. Second embodiment>

The configuration where a category label is output from a decision tree has been described in the first embodiment. In the present embodiment, a case where numerical output is generated from a decision tree will be described.

<2.1 Machine learning processing>

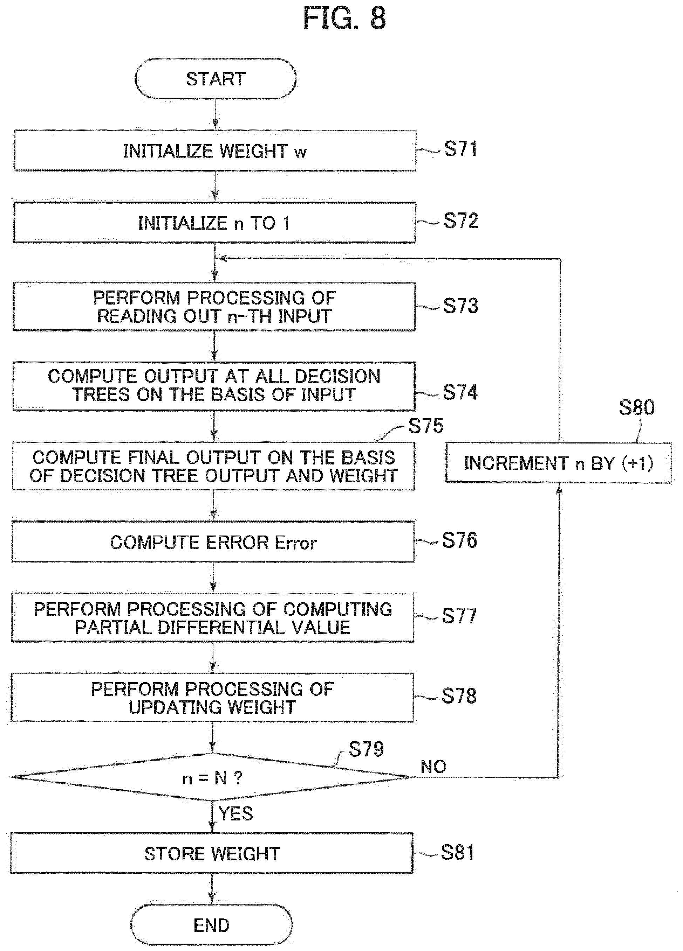

Figure 8 explains learning operation at the information processing device 10 in a case where a numerical value is output from a decision tree. Note that a hardware configuration (see Figure 1) of the information processing device 10, processing of generating a sub-data set, processing of generating a decision tree (S3), and the like, are substantially the same as those in the first embodiment, and thus, description will be omitted here.

As can be clear from Figure 8, when processing is started, a value of the weight w which connects each end node (leaf node) of the decision tree and an output node is initialized (S71). This value to be used in initialization may be, for example, the same among all the weights w. Thereafter, processing of initializing a predetermined variable is performed (S72). Here, a variable n to be used in repetition processing is initialized to 1.

Thereafter, processing of reading out one data set from a learning target data set to the control unit 1 as i-th input data is performed (S73). Then, forward computation is performed while n-th input data is input to each decision tree generated for each sub-data set, a corresponding end node is identified in each decision tree, and numerical output corresponding to the end node is computed (S74).

Thereafter, a value obtained by multiplying respective pieces of decision tree output (respective node values of the output stages) by respective weights w and adding up the multiplication results is computed as final output (Output) from the output node as follows (S75) .

[Expression 14]

$$sign = \begin{cases} 1 & (\; x_i = Teach \;) \\ -1 & (\; x_i \neq Teach \;) \end{cases}$$

Subsequently, an error Error is computed on the basis of the final output (S76). Specifically, the error Error is defined as follows as a sum of values obtained by dividing the square of a difference between the training data corresponding to the input data and the final output value (Output) by 2.

[Expression 15]

$$Error = \frac{1}{2} \sum_n (\; Output_n - \; Teach_n \;)^2$$

Then, this error Error is partially differentiated with the decision tree output as follows to obtain a gradient (S77).

[Expression 16]

$$\frac{\partial Error}{\partial w_i} = (\ Output\ -\ Teach\ ) \times x_i$$

The weight w is updated using this gradient as follows (S78). Note that η is a coefficient for adjusting a degree of update, and, for example, an appropriate value in a range from approximately 0 to 1. This updating processing updates the weight more greatly as the final output value is more apart from the value of the training data.

[Expression 17]

$$w_i \leftarrow w_i - \eta\ (\ Output\ -\ Teach\ ) \times x_i$$

The above-described processing (S73 to S78) is performed on all (N pieces of) input data (S79: No). If the processing is completed for all the input data (S79: Yes), the weight w is stored in the storage unit 2 (S81), and the processing is finished.

Such a configuration enables machine learning processing to be performed appropriately even in a case where numerical output is generated from a decision tree.

Note that the above-described machine learning processing is an example, and other various publicly known methods can be employed in a specific arithmetic expression or a computation method relating to updating of the weight. Further, an updating target is not limited to the weight, and other parameters, for example, a predetermined bias value may be learned.

<2.2 Prediction processing>

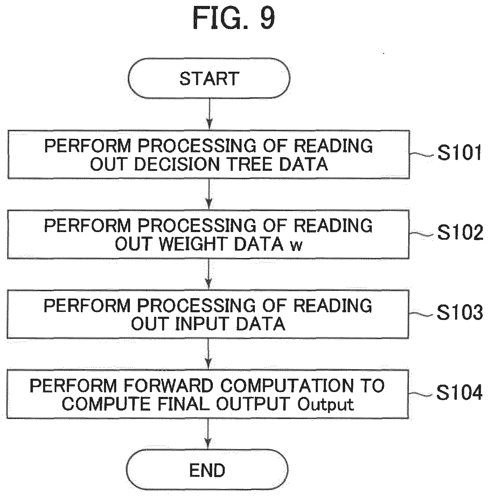

Subsequently, prediction processing to be performed by the information processing device 10 will be described with reference to Figure 9. Figure 9 is a detailed flowchart regarding the prediction processing.

As can be clear from Figure 9, when the processing is started, processing of reading out a plurality of decision trees prepared for each sub-data set is performed (S101). Then, processing of reading out the weight w is performed (S102). Then, input data for which it is desired to perform prediction is read (S103). Thereafter, forward computation is performed to compute final output (Output) (S104). Specifically, a sum of products of output values of respective decision trees (respective node values of output stages) and respective weights w is computed as follows. Then, the processing is finished.

[Expression 18]

$$Output = \sum_i w_i\, x_i$$

Such a configuration enables predicted output to be generated in a regressive manner even in a case where regressive numerical output is generated from a decision tree.

Note that the above-described prediction processing is an example, and other various publicly known methods can be employed as a method for determining an output value, and the like.

<3. Third embodiment>

New learning processing has been described in the machine learning processing in the above-described embodiments. Additional learning processing will be described in the present embodiment.

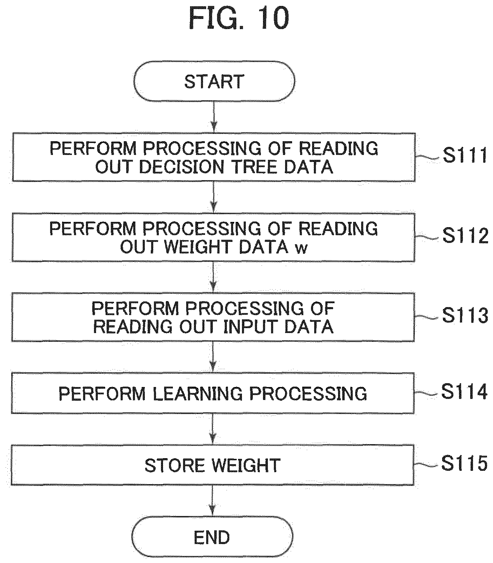

Figure 10 is a flowchart regarding the additional learning processing. As can be clear from Figure 10, when the processing is started, processing of reading out a plurality of decision trees created so as to correspond to respective sub-data sets is performed (Sill). Further, processing of reading out the learned weight w is performed (S112). Thereafter, new input data to be learned is read out (S113). Then, machine learning processing which is substantially the same as the machine learning processing described in the above-described other embodiments except operation for initializing the weight w and the learning target data, is performed (S114). After the machine learning, the weight w is stored in the storage unit 2 (S115), and the processing is finished.

Such a configuration enables only the output network to be updated through learning while using the same decision tree, so that it is possible to provide a machine learning technique which is also suitable for additional learning.

<4. Modification examples>

While the above-described embodiments employ a configuration where, after the decision tree is generated once, the decision tree is fixed and also applied during other learning processing and prediction processing, the present invention is not limited to such a configuration. Thus, for example, it is also possible to additionally increase, decrease, substitute, replace, or delete decision trees.

A decision tree to be substituted, replaced or deleted may be determined on the basis of effectiveness of the decision tree. The effectiveness of the decision tree may be determined, for example, on the basis of a sum, an average, or the like, of the weights of output stage nodes of respective decision trees. Further, decision trees may be ranked on the basis of a magnitude of this effectiveness, and decision trees ranked lower may be preferentially substituted, replaced or deleted. Such a configuration can further improve prediction accuracy, and the like, by replacing, or the like, a basic decision tree.

Further, while, in the above-described embodiments, a so-called artificial neural network including weights and nodes, or a configuration similar to the artificial neural network is employed as the output network in subsequent stages of the decision trees, the present invention is not limited to such a configuration. It is therefore possible to employ a network configuration to which other machine learning techniques such as, for example, support vector machine can be applied, as the output network in subsequent stages of the decision trees.

Further, while in the above-described embodiments, a single output node coupled to output stages of a plurality of decision trees via weights is employed as the output network, the present invention is not limited to such a configuration. It is therefore possible to employ, for example, a multilayer network configuration, a fully-connected network configuration, or a configuration including recurrent paths.

The present invention can be widely applied to machine learning and prediction of various kinds of data including big data. For example, the present invention can be applied to learning and prediction of operation of a robot within a factory, financial data such as stock price, financial credit and insurance service related information, medical data such as medical prescription, supply, demand and purchase data of items, the number of delivered items, direct mail sending related information, economic data such as the number of customers and the number of inquiries, Internet related data such as buzz words, social media (social networking service) related information, IoT device information and Internet security related information, weather related data, real estate related data, healthcare or biological data such as a pulse and a blood pressure, game related data, digital data such as a moving image, an image and speech, or social infrastructure data such as traffic data and electricity data.

Industrial Applicability

The present invention can be utilized in various industries, and the like, which utilize a machine learning technique.

Reference Signs List

1      control unit
2      storage unit
3      display unit
4      operation signal input unit
5      communication unit
6      I/O unit
10     information processing device

Claims

1.   A machine learning device using a plurality of decision trees generated on a basis of a predetermined learning target data set, the machine learning device comprising:

an input data acquiring unit configured to acquire predetermined input data;
a decision tree output generating unit configured to generate decision tree output which is output of each of the decision trees on a basis of the input data; and
a parameter updating unit configured to update a parameter of an output network which is coupled to an output stage of each of the decision trees and generates predicted output on a basis of at least the decision tree output and predetermined training data corresponding to the input data.

2. The machine learning device according to claim 1,
wherein the output network comprises an output node coupled to an end node of each of the decision trees via a weight.

3. The machine learning device according to claim 1,
wherein the input data is data selected from the learning target data set.

4. The machine learning device according to claim 2, further comprising:

a predicted output generating unit configured to generate the predicted output at the output node on a basis of the decision tree output and the weight,
wherein the parameter updating unit further comprises:
a weight updating unit configured to update the weight on a basis of a difference between the training data and the predicted output.

5. The machine learning device according to claim 2,
wherein the parameter updating unit further comprises:

a label determining unit configured to determine whether or not a predicted label which is the decision tree output matches a correct label which is the training data; and
a weight updating unit configured to update the weight on a basis of a determination result by the label determining unit.

6. The machine learning device according to claim 1,
wherein the plurality of decision trees are generated for each of a plurality of sub-data sets which are generated by randomly selecting data from the learning target data set.

7. The machine learning device according to claim 6,
wherein the plurality of decision trees are generated by selecting a branch condition which makes an information gain a maximum on a basis of each of the sub-data sets.

8. A prediction device using a plurality of decision trees generated on a basis of a predetermined learning target data set, the prediction device comprising:

an input data acquiring unit configured to acquire predetermined input data;
a decision tree output generating unit configured to generate decision tree output which is output of each of the decision trees on a basis of the input data; and
an output predicting unit configured to generate predicted output on a basis of an output network including an output node coupled to an end node of each of the decision trees via a weight.

9. The prediction device according to claim 8,
wherein each piece of the decision tree output is numerical output, and
the predicted output is generated on a basis of a sum of products of the numerical output and the weight of all the decision trees.

10. The prediction device according to claim 8,
wherein each piece of the decision tree output is a predetermined label, and
an output label which is the predicted output is a label for which a sum of corresponding weights is a maximum.

11. The prediction device according to claim 1, further comprising:
an effectiveness generating unit configured to generate effectiveness of the decision trees on a basis of a parameter of the output network.

12. The prediction device according to claim 11, further comprising:
a decision tree selecting unit configured to determine the decision trees to be substituted, replaced or deleted on a basis of the effectiveness.

13. A machine learning method using a plurality of decision trees generated on a basis of a predetermined learning target data set, the machine learning method comprising:

an input data acquisition step of acquiring predetermined input data;
a decision tree output generation step of generating decision tree output which is output of each of the decision trees on a basis of the input data; and
a parameter updating step of updating a parameter of an output network which is coupled to an output stage of each of the decision trees and generates predicted output on a basis of at least the decision tree output and predetermined training data corresponding to the input data.

14. A machine learning program for causing a computer to function as a machine learning device which uses a plurality of decision trees generated on a basis of a predetermined learning target data set, the machine learning program comprising:

an input data acquisition step of acquiring predetermined input data;
a decision tree output generation step of generating decision tree output which is output of each of the decision trees on a basis of the input data; and
a parameter updating step of updating a parameter of an output network which is coupled to an output stage of each of the decision trees and generates predicted output on a basis of at least the decision tree output and predetermined training data corresponding to the input data.

15. A prediction method using a plurality of decision trees generated on a basis of a predetermined learning target data set, the prediction method comprising:

an input data acquisition step of acquiring predetermined input data;
a decision tree output generation step of generating decision tree output which is output of each of the decision trees on a basis of the input data; and
an output prediction step of generating predicted output on a basis of an output network including an output node coupled to an end node of each of the decision trees via a weight.

16. A prediction program for causing a computer to function as a prediction device which uses a plurality of decision trees generated on a basis of a predetermined learning target data set, the prediction program comprising:

an input data acquisition step of acquiring predetermined input data;
a decision tree output generation step of generating decision tree output which is output of each of the decision trees on a basis of the input data; and
an output prediction step of generating predicted output on a basis of an output network including an output node coupled to an end node of each of the decision trees via a weight.

17. A learned model comprising:

a plurality of decision trees generated on a basis of a predetermined learning target data set; and
an output network including an output node coupled to an end of each of the decision trees via a weight,
in a case where predetermined input data is input, decision tree output which is output of each of the decision trees being generated on a basis of the input data, and predicted output being generated at the output node on a basis of each piece of the decision tree output and each weight.

FIG. 1

10

1

CONTROL UNIT

2

STORAGE UNIT

3

DISPLAY UNIT

OPERATION SIGNAL
INPUT UNIT

COMMUNICATION
UNIT

I/O UNIT

4

5

6

# FIG. 2

```
          ┌──────────┐
          │  START   │
          └────┬─────┘
               │
               ▼
┌──────────────────────────────────┐
│  PROCESSING OF READING           │ ～S1
│  OUT LEARNING DATA SET           │
└───────────────┬──────────────────┘
               │
               ▼
┌──────────────────────────────────┐
│  DECISION TREE GENERATION        │ ～S3
│  PROCESSING                      │
└───────────────┬──────────────────┘
               │
               ▼
┌──────────────────────────────────┐
│  LEARNING PROCESSING             │ ～S5
└───────────────┬──────────────────┘
               │
               ▼
┌──────────────────────────────────┐
│  PREDICTION PROCESSING           │ ～S9
└───────────────┬──────────────────┘
               │
               ▼
          ┌──────────┐
          │   END    │
          └──────────┘
```

# FIG. 3

# FIG. 4

START

PROCESSING OF GENERATING
SUB-DATA SET (PRE-PROCESSING) ～S31

INITIALIZE t TO 1 ～S32

PERFORM PROCESSING OF GENERATING
DECISION TREE FOR t-TH SUB-DATA SET ～S33
ON THE BASIS OF INFORMATION GAIN

S37

INCREMENT t BY (+1)

$t = T$ ? S36

NO

YES

STORE SUB-DATA SET AND
CORRESPONDING DECISION TREE ～S38

END

# FIG. 5

START

INITIALIZE WEIGHT — S51

INITIALIZE n TO 1 — S52

PERFORM PROCESSING OF
READING OUT n-TH INPUT — S53

PERFORM FORWARD COMPUTATION ON
THE BASIS OF INPUT TO COMPUTE
OUTPUT AT ALL DECISION TREES — S54

COMPUTE ERROR RATE $\varepsilon$ — S56

PERFORM PROCESSING OF
UPDATING WEIGHT — S57

S58

n = N ?

NO

S59

INCREMENT n BY (+1)

YES

STORE WEIGHT — S60

END

# FIG. 6

UPDATE WEIGHT

Output_Next

min Teach max

min Teach max

# FIG. 7

```
        ┌─────────────┐
        │    START    │
        └─────────────┘
               │
               ▼
┌──────────────────────────────┐
│ PERFORM PROCESSING OF READING │── S91
│    OUT DECISION TREE DATA     │
└──────────────────────────────┘
               │
               ▼
┌──────────────────────────────┐
│     PERFORM PROCESSING OF     │── S92
│    READING OUT WEIGHT DATA    │
└──────────────────────────────┘
               │
               ▼
┌──────────────────────────────┐
│     PERFORM PROCESSING OF     │── S93
│    READING OUT INPUT DATA     │
└──────────────────────────────┘
               │
               ▼
┌──────────────────────────────┐
│ PERFORM FORWARD COMPUTATION TO│── S94
│  COMPUTE DECISION TREE OUTPUT │
└──────────────────────────────┘
               │
               ▼
┌──────────────────────────────┐
│    OUTPUT LABEL WHICH MAKES   │── S95
│    SUM OF WEIGHTS MAXIMUM     │
└──────────────────────────────┘
               │
               ▼
        ┌─────────────┐
        │     END     │
        └─────────────┘
```

# FIG. 8

START

INITIALIZE WEIGHT w ~S71

INITIALIZE n TO 1 ~S72

PERFORM PROCESSING OF
READING OUT n-TH INPUT ~S73

COMPUTE OUTPUT AT ALL DECISION
TREES ON THE BASIS OF INPUT ~S74

S75
COMPUTE FINAL OUTPUT ON THE BASIS
OF DECISION TREE OUTPUT AND WEIGHT

S80
INCREMENT n BY (+1)

COMPUTE ERROR Error ~S76

PERFORM PROCESSING OF COMPUTING
PARTIAL DIFFERENTIAL VALUE ~S77

PERFORM PROCESSING OF
UPDATING WEIGHT ~S78

S79
n = N ? NO

YES

STORE WEIGHT ~S81

END

# FIG. 9

START

PERFORM PROCESSING OF READING OUT DECISION TREE DATA — S101

PERFORM PROCESSING OF READING OUT WEIGHT DATA w — S102

PERFORM PROCESSING OF READING OUT INPUT DATA — S103

PERFORM FORWARD COMPUTATION TO COMPUTE FINAL OUTPUT Output — S104

END

# FIG. 10

START

PERFORM PROCESSING OF READING OUT DECISION TREE DATA ~S111

PERFORM PROCESSING OF READING OUT WEIGHT DATA w ~S112

PERFORM PROCESSING OF READING OUT INPUT DATA ~S113

PERFORM LEARNING PROCESSING ~S114

STORE WEIGHT ~S115

END

# FIG. 11

LEARNING DATA SET

SUB-DATA SET 1　　SUB-DATA SET 2　　...　　SUB-DATA SET T

# FIG. 12

ROOT NODE

$x_1 > \theta_1$

$x_2 \leqq \theta_2$

BRANCH

$x_2 > \theta_3$

$x_1 \leqq \theta_4$

A  B  C  D  E LEAF NODE

(a) EXAMPLE OF DECISION TREE

$x_2$

$\theta_3$

$\theta_2$

B

E

A

C

D

$\theta_1$    $\theta_4$   $x_1$

(b) EXAMPLE OF TWO-DIMENSIONAL INPUT SPACE

# FIG. 13

$$I_G(D_p) = 1 - \left(\left(\frac{40}{80}\right)^2 + \left(\frac{40}{80}\right)^2\right) = 0.5$$

$$I_G(D_{left}) = 1 - \left(\left(\frac{30}{40}\right)^2 + \left(\frac{10}{40}\right)^2\right) = 0.375$$

(40,40)

(30,10)  (10,30)

$$I_G(D_{right}) = 1 - \left(\left(\frac{10}{40}\right)^2 + \left(\frac{30}{40}\right)^2\right) = 0.375$$

$$IG_G = 0.5 - \frac{40}{80} \times 0.375 - \frac{40}{80} \times 0.375 = 0.125$$

(a) CALCULATION EXAMPLE OF INFORMATION GAIN (No.1)

(40,40)

(20,40)  (20,0)

$$I_G(D_{left}) = 1 - \left(\left(\frac{20}{60}\right)^2 + \left(\frac{40}{60}\right)^2\right) = \frac{4}{9}$$

$$I_G(D_{right}) = 1 - (1^2 - 0^2) = 0$$

$$IG_G = 0.5 - \frac{60}{80} \times \frac{4}{9} = 0.16\ldots$$

(b) CALCULATION EXAMPLE OF INFORMATION GAIN (No.2)

# FIG. 14

CLASSIFICATION: MAJORITY RULE
REGRESSION: AVERAGE

<table>
<tr><td colspan="2" align="center">**INTERNATIONAL SEARCH REPORT**</td><td colspan="2">International application No.<br><br>PCT/JP2019/024767</td></tr>
</table>

**A. CLASSIFICATION OF SUBJECT MATTER**
Int.Cl. G06N20/00(2019.01)i

According to International Patent Classification (IPC) or to both national classification and IPC

**B. FIELDS SEARCHED**

Minimum documentation searched (classification system followed by classification symbols)
Int.Cl. G06N20/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | REN, Shaoqing et al., "Global Refinement of Random Forest", IEEE [online], 15 October 2015, pp. 723–730, [retrieval date 05 September 2019], Interne: \<URL:https://ieeexplore.ieee.org/document/7298672\>, in particular, chapter 3 | 1–17 |
| A | 日比野慎也ほか，AutoEncoder を導入した Regression Forests によるノイズ発見，電子情報通信学会技術研究報告 BioX2016-33-BioX2016-76 バイオメトリクス，13 March 2017, vol. 116, no. 527, pp. 209–214, ISSN 0913-5685, in particular, sections 3.3-3.4, (HIBINO, Masaya et al., "Noise Detection of Regression Forests with AutoEncoder", IEICE Technical Report, BioX2016-33-BioX2016-76 Biometrics) | 1–17 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 September 2019 (05.09.2019) | 17 September 2019 (17.09.2019) |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- RANDOM FORESTS. **LEO BREIMAN.** Statistics Department. University of California Berkeley, January 2001